# EUROPÄISCHE PATENTANMELDUNG

(11) **EP 2 703 741 A1**
(43) Veröffentlichungstag der Anmeldung: **05.03.2014**
(21) Anmeldenummer: 12182020.3
(22) Anmeldetag: 28.08.2012
(51) Int. Cl.: F24D 3/14, F24D 3/16

(54) **Plattenaggregat und Verfahren zur Herstellung eines Plattenaggregates**

(71) Anmelder: Roth Werke GmbH, 35232 Dautphetal (DE)
(72) Erfinder:
(74) Vertreter: Rohmann, Michael

(57) **Zusammenfassung**

Plattenaggregat zur Aufnahme von Heizungsrohren und/oder Kühlrohren, mit einer unteren Lage und einer darauf fixierten oberen Lage, wobei die obere Lage zumindest eine Aufnahmenut mit zumindest einem darin aufgenommenen Heizungsrohr und/oder Kühlrohr aufweist. Das Heizungsrohr und/oder Kühlrohr liegt zumindest bereichsweise auf der unteren Lage auf. Die untere Lage weist eine geringere Härte auf als die obere Lage.

## Beschreibung

Die Erfindung betrifft ein Plattenaggregat zur Aufnahme von Heizungsrohren und/oder Kühlrohren. Fernerhin betrifft die Erfindung ein Verfahren zur Herstellung eines solchen Plattenaggregates. Die erfindungsgemäßen Plattenaggregate werden vorzugsweise für Fußbodenheizungen eingesetzt. Grundsätzlich können die Plattenaggregate aber auch für Wände und/oder Decken zum Zwecke der Wand- und/oder Deckentemperierung vorgesehen sein. Die Heizungsrohre und/oder Kühlrohre werden in an sich bekannter Weise in Aufnahmenuten aufgenommen, die in dem Plattenaggregat vorgesehen sind.

Plattenaggregate der eingangs genannten Art sind aus der Praxis in verschiedenen Ausführungsformen bekannt. Viele bekannte Plattenaggregate für Fußbodenheizungen lassen insbesondere im Hinblick auf die Trittschalldämmung zu wünschen übrig. Auch der gewünschte Wärmeübergang ist bei zahlreichen Plattenaggregaten nicht zufriedenstellend. Um vorteilhafte Eigenschaften zu erreichen, ist bei einer Reihe von Plattenaggregaten eine relativ große Dicke und/oder eine verhältnismäßig aufwendige Herstellung erforderlich.

Demgegenüber liegt der Erfindung das technische Problem zugrunde, ein Plattenaggregat der eingangs genannten Art anzugeben, bei dem die vorstehend beschriebenen Nachteile vermieden werden können. Der Erfindung liegt weiterhin das technische Problem zugrunde, ein Verfahren zur Herstellung eines solchen Plattenaggregates anzugeben.

Zur Lösung dieses technischen Problems lehrt die Erfindung zunächst ein Plattenaggregat zur Aufnahme von Heizungsrohren und/oder Kühlrohren, - mit einer unteren Lage und einer darauf fixierten oberen Lage, wobei die obere Lage zumindest eine Aufnahmenut mit zumindest einem darin aufgenommenen Heizungsrohr und/oder Kühlrohr aufweist, wobei das Heizungsrohr und/oder Kühlrohr zumindest bereichsweise auf der unteren Lage aufliegt und wobei die untere Lage eine geringere Härte aufweist als die obere Lage. Geringere Härte meint insbesondere, dass die untere Lage bei mechanischer Belastung nachgiebiger ist als die obere Lage.

Statt des Begriffes Heizungsrohr oder Kühlrohr wird nachfolgend auch kurz der Begriff Rohr verwendet. Es liegt im Rahmen der Erfindung, dass das erfindungsgemäße Plattenaggregat mehrere Aufnahmenuten zur Aufnahme eines Rohres bzw. zur Aufnahme von Rohren aufweist. Das Rohr bzw. die Rohre können vorzugsweise in Form eines Rohrregisters mit entsprechenden bogenförmigen Umlenkabschnitten in dem Plattenaggregat aufgenommen sein. Es liegt im Rahmen der Erfindung, dass das Rohr bzw. die Rohre vollständig bzw. über ihre gesamte Länge auf der unteren Lage aufliegt/aufliegen. Das Rohr bzw. die Rohre liegt/liegen über zumindest 85 % ihrer Länge, bevorzugt über zumindest 90 % ihrer Länge auf der unteren Lage auf.

Empfohlenermaßen sind die erfindungsgemäßen Plattenaggregate in der Draufsicht rechteckförmig ausgebildet. Die Plattenaggregate eignen sich vor allem für Wohnbereiche bzw. für die Verlegung von Fußböden in Wohnbereichen. Zweckmäßigerweise werden nach Verlegung eines Plattenaggregates bzw. nach Verlegung von Plattenaggregaten die Aufnahmenuten mit einer Spachtelmasse gefüllt. Es liegt auch im Rahmen der Erfindung, dass eine Schicht einer solchen Spachtelmasse auf der oberen Lage vorgesehen wird. Die Schicht kann beispielsweise eine Dicke von 0,8 bis 1,5 mm aufweisen.

Eine sehr bevorzugte Ausführungsform der Erfindung ist dadurch gekennzeichnet, dass die untere Lage aus einem Vliesstoff bzw. im Wesentlichen aus einem Vliesstoff besteht. Zweckmäßigerweise wird ein Nonwoven-Vliesstoff für die untere Lage eingesetzt. Empfohlenermaßen besteht der Vliesstoff aus Kunststofffasern und bevorzugt aus Polyesterfasern und/oder Polyolefinfasern, beispielsweise aus Polypropylenfasern. Es können aber auch Fasern aus Mineralien und/oder aus nachwachsenden Rohstoffen zum Einsatz kommen. Es empfiehlt sich, dass der Vliesstoff ein Flächengewicht von 800 bis 5.000 g/m², vorzugsweise von 2.500 bis 4.000 g/m², aufweist. Empfohlenermaßen beträgt die Dicke der unteren Lage 3 bis 8 mm, bevorzugt 4 bis 6 mm und besonders bevorzugt 4,5 bis 5,5 mm.

Es liegt im Rahmen der Erfindung, dass die obere Lage aus Estrich, insbesondere Trockenestrich bzw. im Wesentlichen aus Estrich, insbesondere im Wesentlichen aus Trockenestrich besteht. Zweckmäßigerweise handelt es sich um einen zementären oder gipshaltigen Estrich. Es empfiehlt sich, dass die Dicke der oberen Lage 9 bis 24 mm, bevorzugt 10 bis 14 mm und besonders bevorzugt 11 bis 13 mm beträgt. Die Dicke der oberen Lage meint hier die Dicke außerhalb der Aufnahmenuten der oberen Lage.

Erfindungsgemäß sind die obere Lage und die untere Lage aneinander fixiert. Es liegt im Rahmen der Erfindung, dass hierzu zumindest eine, bevorzugt eine Verbindungsschicht zwischen der oberen Lage und der unteren Lage angeordnet ist. Es liegt weiterhin im Rahmen der Erfindung, dass diese Verbindungsschicht den Verbund zwischen oberer und unterer Lage sicherstellt. Gemäß einer bevorzugten Ausführungsform der Erfindung ist die Verbindungsschicht vollflächig bzw. im Wesentlichen vollflächig zwischen der oberen Lage und der unteren Lage angeordnet. Die Verbindungsschicht kann aber auch nur bereichsweise zwischen oberer Lage und unterer Lage vorhanden sein. Nach besonders bevorzugter Ausführungsform der Erfindung handelt es sich bei der Verbindungsschicht um eine Kleberschicht. Dann sind also die untere Lage und die obere Lage mittels eines Klebers miteinander verbunden bzw. miteinander verklebt.

Eine sehr bevorzugte Ausführungsform der Erfindung ist dadurch gekennzeichnet, dass auf der der oberen Lage zugewandten Oberfläche der unteren Lage zumindest eine dünne Zwischenlage aus einem wärmeleitfähigen Material zumindest im Bereich der Aufnahmenuten bzw. unterhalb der Aufnahmenuten angeordnet ist bzw. fixiert ist. Gemäß einer Ausführungsvariante kann die Zwischenlage vollflächig bzw. im Wesentlichen vollflächig zwischen der unteren Lage und der oberen Lage vorgesehen sein. Nach bevorzugter Ausführungsform der Erfindung sind lediglich Abschnitte bzw. Streifen einer solchen Zwischenlage in bestimmten Bereichen angeordnet und zwar sehr bevorzugt in den Bereichen unterhalb der Aufnahmenuten. Eine empfohlene Ausführungsform der Erfindung ist dadurch gekennzeichnet, dass in den Bereichen unterhalb der Aufnahmenuten bzw. in den Bereichen unmittelbar unterhalb der Aufnahmenuten keine Verbindungsschicht bzw. Kleberschicht zwischen oberer Lage und unterer Lage vorhanden ist. Dann liegen die in den Aufnahmenuten aufgenommenen Rohre zweckmäßigerweise unmittelbar auf der Zwischenlage aus dem wärmeleitfähigen Material auf. Insoweit meint das Merkmal, wonach das Heizungsrohr und/oder Kühlrohr zumindest bereichsweise auf der unteren Lage aufliegt in Bezug auf diese bevorzugte Ausführungsform auch, dass das Rohr auf der auf der unteren Lage vorgesehenen Zwischenlage aufliegt.

Dünne Zwischenlage meint im Übrigen, dass die Zwischenlage dünner bzw. deutlich dünner ist als die untere Lage und die obere Lage. Wärmeleitfähiges Material meint bei dieser Ausführungsvariante, dass die Wärmeleitfähigkeit der Zwischenlage größer bzw. deutlich größer als die Wärmeleitfähigkeit der unteren Lage und der oberen Lage ist. Zweckmäßigerweise wird die Zwischenlage bzw. werden Abschnitte der Zwischenlage auf die untere Lage aufgeklebt. Die Zwischenlage dient vor allem der Verbesserung des Wärmeübergangs in dem erfindungsgemäßen Plattenaggregat. Nach besonders bevorzugter Ausführungsform der Erfindung ist die Zwischenlage in Form einer Metallfolie, insbesondere in Form einer Aluminiumfolie ausgebildet. Zweckmäßigerweise sind Metallfolienstreifen bzw. Aluminiumfolienstreifen insbesondere im Bereich unterhalb der Aufnahmenuten auf der unteren Lage fixiert bzw. angeklebt. Die Dicke der Zwischenlage bzw. der Metallfolie beträgt vorzugsweise 300 bis 650 µm und bevorzugt 500 bis 600 µm. - Die Gesamtdicke des Plattenaggregates aus unterer Lage und oberer Lage und optional Zwischenlage beträgt empfohlenermaßen 14 bis 22 mm, bevorzugt 16 bis 20 mm.

Eine empfohlene Ausführungsform der Erfindung zeichnet sich dadurch aus, dass die obere Lage an zumindest einer Seite, bevorzugt an zwei Seiten des Plattenaggregates, über die untere Lage übersteht und dass ein überstehender Abschnitt der oberen Lage ein Verbindungselement zur Verbindung des Plattenaggregates mit einem benachbarten Plattenaggregat ist. Zweckmäßigerweise sind die überstehenden Abschnitte an zwei aneinander angrenzenden Seiten des Plattenaggregates vorgesehen. Empfohlenermaßen ist an den beiden anderen Seiten eines rechteckförmigen Plattenaggregates die obere Lage gegenüber der unteren Lage zurückgesetzt, so dass sich jeweils ein Verbindungsabschnitt für einen überstehenden Abschnitt der oberen Lage eines benachbarten Plattenaggregates ergibt. Die Breite eines solchen Verbindungsabschnittes entspricht vorzugsweise der Breite eines überstehenden Abschnittes der oberen Lage. Auf diese Weise resultiert an einem Plattenaggregat ein zweiseitiger Stufenfalz und somit ist ein flächiger Verbund von mehreren Plattenaggregaten problemlos herstellbar. Es liegt im Rahmen der Erfindung. dass ein überstehender Abschnitt der oberen Lage eines Plattenaggregates im verlegten Zustand mehrerer Plattenaggregate auf der Oberseite der unteren Lage bzw. auf dem Verbindungsabschnitt eines benachbarten Plattenaggregates aufliegt. Die Verbindung zweier benachbarter Plattenaggregate kann dabei mittels eines Klebers oder mit Hilfe von mechanischen Befestigungsmitteln realisiert werden.

Eingangs wurde bereits darauf hingewiesen, dass die erfindungsgemäßen Plattenaggregate auch an Wänden und/oder Decken von Räumen zum Zwecke der Wand- und/oder Deckentemperierung vorgesehen sein können. Dann dienen die Platten aggregate nicht der Trittschalldämmung sondern vielmehr wärmetechnischen Zwecken bzw. der Wärmedämmung. Bei diesem Verwendungszweck besteht die untere Lage bevorzugt aus dampfdiffusionsoffenen Materialien, wie beispielsweise aus Holzfaserdämmplatten. Es liegt dann im Rahmen der Erfindung, dass die Dicke der unteren Lage größer ist bzw. deutlich größer ist als die weiter oben angegebenen Dicken für die untere Lage.

Zur Lösung des technischen Problems lehrt die Erfindung auch ein Verfahren zur Herstellung eines Plattenaggregates zur Aufnahme von Heizungsrohren und/oder Kühlrohren, wobei an der Unterseite einer oberen Lage eine untere Lage mit im Vergleich zur oberen Lage geringerer Härte fixiert wird, insbesondere angeklebt wird, wobei anschließend zumindest eine Aufnahmenut von der Oberseite der oberen Lage her mit der Maßgabe erzeugt wird, dass sich die Aufnahmenut über die gesamte Dicke der oberen Lage erstreckt und wobei daraufhin zumindest ein Heizungsrohr und/oder Kühlrohr in die Aufnahmenut eingebracht wird. Es liegt somit im Rahmen der Erfindung, dass bezüglich der Dicke der oberen Lage durchgehende Aufnahmenuten erzeugt werden. Ein in einer Aufnahmenut aufgenommenes Rohr liegt zweckmäßigerweise auf der unteren Lage bzw. auf einer an der unteren Lage fixierten Zwischenlage auf.

Nach einer sehr bevorzugten Ausführungsform des erfindungsgemäßen Verfahrens wird zunächst in die Unterseite der oberen Lage zumindest eine Nut mit der Maßgabe eingebracht bzw. eingeschnitten, dass an der Oberseite der oberen Lage ein Nutboden verbleibt. Im Anschluss daran wird die untere Lage an der Unterseite der oberen Lage fixiert und erst danach wird der an der Oberseite der oberen Lage angeordnete Nutboden entfernt, so dass eine sich über die gesamte Dicke der oberen Lage erstreckende Aufnahmenut entsteht. Zweckmäßigerweise werden in einer oberen Lage eines Plattenaggregates mehrere Nuten und mehrere Nutböden sowie mehrere Aufnahmenuten erzeugt. Die Dicke des bei dieser Verfahrensweise zunächst noch verbleibenden Nutbodens beträgt vorzugsweise 0,8 bis 5 mm, bevorzugt 3 bis 4 mm. Gemäß empfohlener Ausführungsform der Erfindung wird der Nutboden nach der Fixierung der unteren Lage mit der Maßgabe entfernt, dass die Breite der resultierenden Aufnahmenut im Bereich des entfernten Nutbodens geringer ist als die Breite der Aufnahmenut außerhalb bzw. unterhalb dieses Bereiches. Auf diese Weise entstehen an der Oberseite der oberen Lage Hinterschnitte. Es liegt im Rahmen der Erfindung, dass zum Einbringen eines Rohres in eine Aufnahmenut das Rohr an den Hinterschnitten vorbei in die Aufnahmenut gedrückt wird.

Grundsätzlich kann die obere Lage eines erfindungsgemäßen Plattenaggregates auch auf eine andere Weise hergestellt werden, indem Streifen aus dem Material der oberen Lage zu der oberen Lage kombiniert werden. Zur Realisierung einer Aufnahmenut werden zwei dieser Streifen mit der gewünschten Nutbreite entsprechendem Abstand zueinander angeordnet. Es empfiehlt sich, dass jeder Streifen nutseitig einen unterhalb der Oberseite des Streifens angeordneten Hinterschnitt aufweist, so dass bei Kombination zweier Streifen eine Aufnahmenut mit oberen gegenüberliegenden Hinterschnitten entsteht. Zweckmäßigerweise werden die zu der oberen Lage kombinierten Streifen auf der unteren Lage fixiert, vorzugsweise angeklebt.

Eine bewährte Ausführungsform des erfindungsgemäßen Verfahrens zeichnet sich dadurch aus, dass zumindest eine dünne Zwischenlage aus einem wärmeleitfähigen Material auf der unteren Lage fixiert wird, insbesondere angeklebt wird und dass die untere Lage anschließend unter Zwischenschaltung der Zwischenlage an der oberen Lage fixiert wird, zweckmäßigerweise angeklebt wird. Die Begriffe dünne Zwischenlage und wärmeleitfähiges Material wurden bereits weiter oben definiert. Es wurde dort auch darauf hingewiesen, dass die Zwischenlage nicht zwangsläufig vollflächig zwischen der oberen Lage und der unteren Lage vorhanden sein muss. Vielmehr sind nach bevorzugter Ausführungsform lediglich Abschnitte bzw. Streifen der Zwischenlage insbesondere und empfohlenermaßen lediglich im Bereich unterhalb der Aufnahmenuten angeordnet.

Vorzugsweise wird im Rahmen des erfindungsgemäßen Verfahrens nach dem Einbringen eines Rohres in eine Aufnahmenut die Aufnahmenut mit einer Spachtelmasse aufgefüllt. Zweckmäßigerweise wird weiterhin eine Schicht der Spachtelmasse über der Oberseite der oberen Lage vorgesehen. Diese Schicht weist bevorzugt eine Dicke von 0,8 bis 3 mm, sehr bevorzugt eine Dicke von 1 bis 2 mm auf.

Der Erfindung liegt zunächst die Erkenntnis zugrunde, dass sich die erfindungsgemäßen Plattenaggregate bei der Verwendung für Fußböden durch eine überraschend effektive Trittschalldämmung auszeichnen. Außerdem genügen die thermischen Übergänge bzw. die Wärmeübergänge innerhalb eines erfindungsgemäßen Plattenaggregates allen Anforderungen. Unter Beibehaltung dieser Vorteile können die erfindungsgemäßen Plattenaggregate nichtsdestoweniger mit einer relativ geringen Dicke realisiert werden. Sie ermöglichen somit einen vorteilhaft niedrigen Fußbodenaufbau. Bei der Verwendung der erfindungsgemäßen Plattenaggregate für Fußböden ergibt sich im Übrigen - insbesondere bei nachträglichem Einbau bzw. bei einer Sanierung - der beachtliche Vorteil, dass lokale Unebenheiten im Unterboden aufgrund der weichen bzw. weicheren unteren Lage relativ einfach ausgeglichen werden können. Hervorzuheben ist auch, dass die Herstellung der erfindungsgemäßen Plattenaggregate verhältnismäßig wenig aufwändig ist und die Plattenaggregate können mit relativ geringem Kostenaufwand realisiert werden. Beim Einsatz der erfindungsgemäßen Plattenaggregate an Wänden und/oder Decken zeichnen sich die Aggregate durch optimale Wärmeübergänge bzw. durch eine optimale Wärmedämmung aus.

Nachfolgend wird die Erfindung anhand einer lediglich ein Ausführungsbeispiel darstellenden Zeichnung näher erläutert. Es zeigen in schematischer Darstellung:
- Fig. 1: eine perspektivische Darstellung eines erfindungsgemäßen Plattenaggregates,
- Fig. 2: einen ersten Verfahrensschritt bei der Herstellung eines erfindungsgemäßen Plattenaggregates,
- Fig. 3: einen zweiten Verfahrensschritt bei dieser Herstellung und
- Fig. 4: einen dritten Verfahrensschritt.

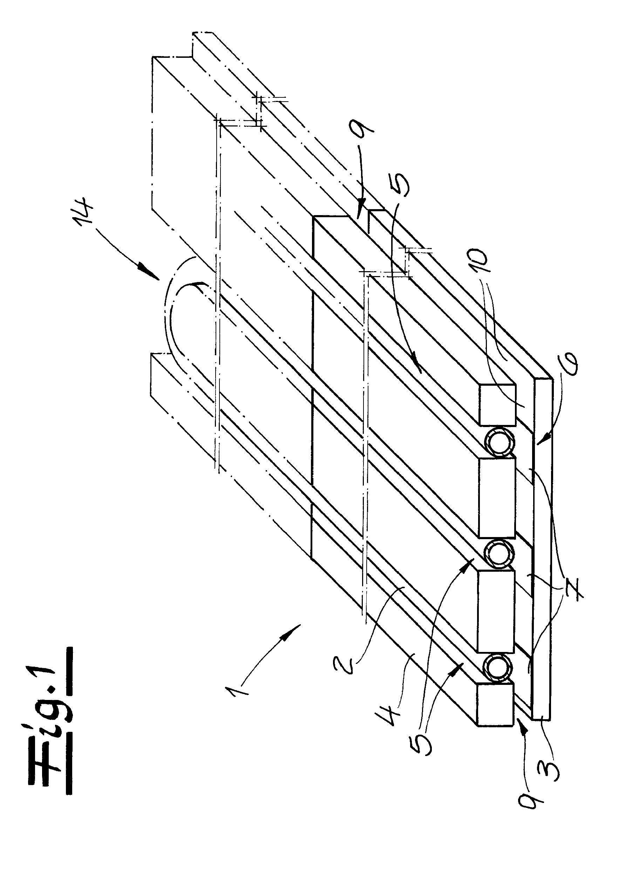

Fig. 1 zeigt ein erfindungsgemäßes Plattenaggregat 1 zur Aufnahme von Heizungsrohren 2 mit einer unteren Lage 3 und einer darauf fixierten oberen Lage 4. Die untere Lage 3 weist eine geringere Härte auf als die obere Lage 4. Vorzugsweise und im Ausführungsbeispiel ist die untere Lage 3 als Vliesstoff aus Kunststofffasern ausgebildet und die obere Lage 4 ist bevorzugt als Trockenestrichlage ausgebildet. Die obere Lage 4 weist Aufnahmenuten 5 mit darin aufgenommenen Heizungsrohren 2 auf. Es liegt im Rahmen der Erfindung, dass die obere Lage 4 mittels einer als Kleberschicht 4a ausgebildeten Verbindungsschicht an der unteren Lage 3 fixiert ist. Vorzugsweise ist die Kleberschicht 4a vollflächig bzw. im Wesentlichen vollflächig zwischen der oberen Lage 4 und der unteren Lage 3 vorgesehen. Zweckmäßigerweise und im Ausführungsbeispiel ist die Kleberschicht 4a lediglich unterhalb der Aufnahmenuten 5 nicht vorhanden.

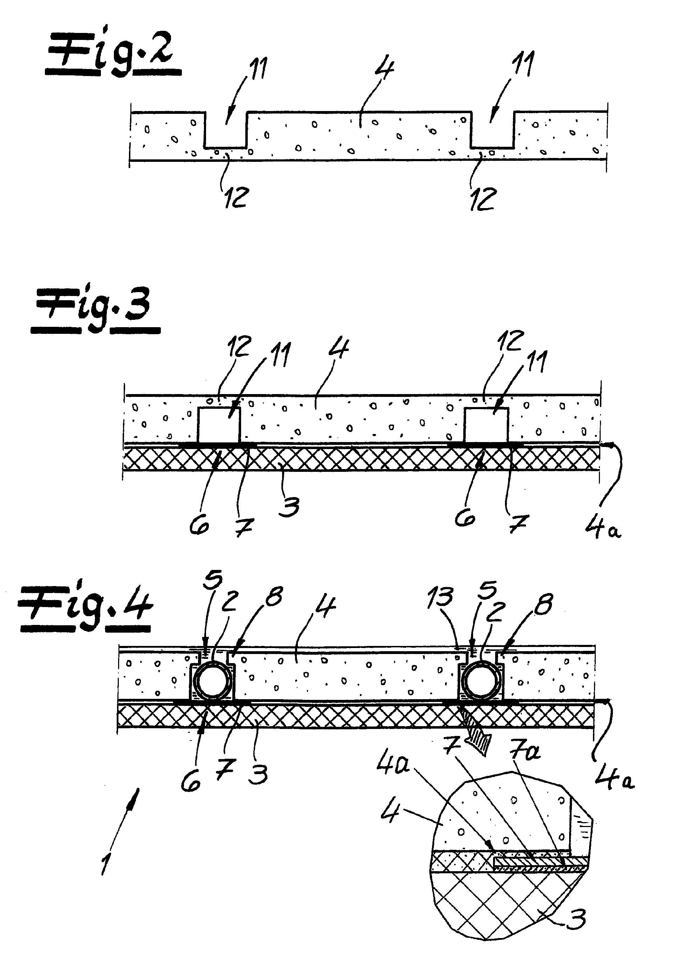

Empfohlenermaßen und im Ausführungsbeispiel ist zwischen der unteren Lage 3 und der oberen Lage 4 bereichsweise eine dünne Zwischenlage 6 aus einem wärmeleitfähigen Material angeordnet. Diese Zwischenlage 6 ist im Ausführungsbeispiel in Form von Aluminiumfolienstreifen 7 verwirklicht, die sich unterhalb der Aufnahmenuten 5 entlang der Aufnahmenuten 5 erstrecken. Diese Aluminiumfolienstreifen 7 bedingen einen verbesserten Wärmeübergang. Im Ausführungsbeispiel erstreckt sich der Aluminiumfolienstreifen 7 zweckmäßigerweise an beiden Seiten einer Aufnahmenut 5 über die Breite der Aufnahmenut 5 hinaus in Bereiche zwischen der unteren Lage 3 und der oberen Lage 4. Empfohlenermaßen und im Ausführungsbeispiel ist ein Aluminiumstreifen 7 mit einer in Form eines Klebers 7a ausgebildeten Fixierungsschicht an der unteren Lage 3 fixiert. In dem vergrößerten Ausschnitt der Fig. 4 ist erkennbar, dass in den Bereichen außerhalb der Aufnahmenuten 5 der Aluminiumstreifen 7 einerseits mit dem Kleber 7a an der unteren Lage 3 fixiert ist und andererseits mittels der Kleberschicht 4a mit der oberen Lage 4 verbunden ist. Dagegen ist vorzugsweise und im Ausführungsbeispiel im Bereich der Aufnahmenuten 5 keine Kleberschicht 4a oberhalb des Aluminiumstreifens 7 vorgesehen, so dass die Heizungsrohre 2 hier unmittelbar auf dem zugeordneten Aluminiumstreifen 7 aufliegen.

Die Dicke der oberen Lage 4 bzw. der Trockenestrichlage mag im Ausführungsbeispiel 12 mm betragen und die Dicke der unteren Lage 3 bzw. die Dicke des Vliesstoffes mag im Ausführungsbeispiel 6 mm betragen. die Dicke der Aluminiumfolienstreifen 7 beträgt im Ausführungsbeispiel 500 µm. Somit beträgt die Dicke des Aggregates aus unterer Lage 3, Zwischenlage 6 und oberer Lage 4 etwa 18 mm.

In den Fig. 1 und 4 ist erkennbar, dass sich die Aufnahmenuten 5 über die gesamte Dicke der oberen Lage 4 erstrecken und somit zur unteren Lage 3 bzw. zur Zwischenlage 6 hin offen sind. Somit liegen die Heizungsrohre 2 auf der Zwischenlage 6 bzw. auf den Aluminiumfolienstreifen 7 auf. Im oberen Bereich der Aufnahmenuten 5 ist zweckmäßigerweise und im Ausführungsbeispiel an den gegenüberliegenden Seiten der Aufnahmenuten 5 jeweils ein Hinterschnitt 8 zur Fixierung der Heizungsrohre 2 realisiert. - Vorzugsweise sind die Heizungsrohre 2 in Form von Rohrregistern mit bogenförmigen Umlenkabschnitten 14 angeordnet.

Ein erfindungsgemäßes Plattenaggregat 1 ist bevorzugt und im Ausführungsbeispiel in der Draufsicht rechteckförmig ausgebildet. In der Fig. 1 ist erkennbar, dass die obere Lage 4 bzw. die Trockenestrichlage an zwei aneinander grenzenden Seiten des Plattenaggregates 1 über die untere Lage 3 übersteht. Die überstehenden Abschnitte 9 der oberen Lage 4 liegen im verlegten Zustand der Plattenaggregate 1 auf den benachbarten Plattenaggregaten 1 auf. In der Fig. 1 ist weiterhin erkennbar, dass an den zwei anderen aneinander grenzenden Seiten des Plattenaggregates 1 die obere Lage 4 mit Abstand vor dem Rand des Plattenaggregates 1 endet, so dass sich hier Verbindungsabschnitte 10 der unteren Lage 3 ergeben, auf denen die überstehenden Abschnitte 9 benachbarter Plattenaggregate 1 aufliegen. Durch den beschriebenen zweiseitigen Stufenfalz ist auf einfache Weise ein flächiger Verbund von Plattenaggregaten 1 herstellbar.

In den Fig. 2 bis 4 ist eine bevorzugte Verfahrensweise zur Herstellung eines erfindungsgemäßen Plattenaggregates 1 dargestellt. In der Fig. 2 ist gezeigt, dass zunächst in die Unterseite der oberen Lage 4 bzw. der Trockenestrichlage Nuten 11 mit der Maßgabe eingebracht bzw. eingeschnitten werden, dass an der Oberseite der oberen Lage 4 ein Nutboden 12 verbleibt. Der Nutboden 12 mag im Ausführungsbeispiel eine Dicke von 2 bis 4 mm aufweisen. - In der Fig. 3 ist erkennbar, dass anschließend die obere Lage 4 gewendet wird, so dass ihre durchgehende Oberseite nach oben weist. Daraufhin wird die untere Lage 3 bzw. die Vliesstofflage auf die Unterseite der oberen Lage 4 aufgeklebt. Die untere Lage 3 bzw. die Vliesstofflage weist dabei aufgeklebte Aluminiumfolienstreifen 7 auf, die im fixierten Zustand der Lagen 3, 4 unterhalb der Nuten 11 angeordnet sind. - Der Fig. 4 ist entnehmbar, dass im Anschluss daran von der Oberseite der oberen Lage 4 her die über die gesamte Dicke der oberen Lage 4 durchgehenden Aufnahmenuten 5 erzeugt werden. Dabei werden die Nutböden 12 entfernt und zwar mit der Maßgabe, dass an gegenüberliegenden Seiten der Aufnahmenuten 5 Hinterschnitte 8 für die Fixierung der Heizungsrohre 2 gebildet werden. Die Aufnahmenuten 5 weisen also in ihrem oberen Bereich eine geringere Breite auf als in dem darunter liegenden Bereich. In der Fig. 4 ist fernerhin erkennbar, dass die Heizungsrohre 2 im verlegten Zustand auf den auf der unteren Lage 3 aufgeklebten Aluminiumfolienstreifen 7 aufliegen. Auf diese Weise kommt ein effektiver Wärmeübergang zustande. In der Fig. 4 ist weiterhin angedeutet worden, dass nach Einbringen der Heizungsrohre 2 die Aufnahmenuten 5 mit einer Spachtelmasse 13 verfüllt werden. Außerdem wird zweckmäßigerweise und im Ausführungsbeispiel auf der Oberseite der oberen Lage 4 eine Schicht dieser Spachtelmasse 13 aufgebracht. Darauf können dann beispielsweise Fliesen oder dergleichen als Bodenbelag verlegt werden.

## Patentansprüche

1. Plattenaggregat (1) zur Aufnahme von Heizungsrohren (2) und/oder Kühlrohren - mit einer unteren Lage (3) und einer darauf fixierten oberen Lage (4), wobei die obere Lage (4) zumindest eine Aufnahmenut (5) mit zumindest einem darin aufgenommenen Heizungsrohr (2) und/oder Kühlrohr aufweist, wobei das Heizungsrohr (2) und/oder Kühlrohr zumindest bereichsweise auf der unteren Lage (3) aufliegt und wobei die untere Lage (3) eine geringere Härte aufweist als die obere Lage (4).

2. Plattenaggregat nach Anspruch 1, wobei die untere Lage (3) aus einem Vliesstoff bzw. im Wesentlichen aus einem Vliesstoff besteht.

3. Plattenaggregat nach Anspruch 2, wobei der Vliesstoff ein Flächengewicht von 800 bis 5.000 g/m², vorzugsweise von 2.500 bis 4.000 g/m², aufweist.

4. Plattenaggregat nach einem der Ansprüche 1 bis 3, wobei die Dicke der unteren Lage (3) 3 bis 8 mm, vorzugsweise 4 bis 6 mm beträgt.

5. Plattenaggregat nach einem der Ansprüche 1 bis 4, wobei die obere Lage (4) aus Estrich, insbesondere Trockenestrich bzw. im Wesentlichen aus Estrich, insbesondere im Wesentlichen aus Trockenestrich besteht.

6. Plattenaggregat nach einem der Ansprüche 1 bis 5, wobei die Dicke der oberen Lage (4) 9 bis 24 mm, bevorzugt 10 bis 14 mm und besonders bevorzugt 11 bis 13 mm, beträgt.

7. Plattenaggregat nach einem der Ansprüche 1 bis 6, wobei die untere Lage (3) und die obere Lage (4) miteinander verklebt sind.

8. Plattenaggregat nach einem der Ansprüche 1 bis 7, wobei zwischen der oberen Lage (4) und der unteren Lage (3) eine dünne Zwischenlage (6) aus einem wärmeleitfähigen Material zumindest im Bereich der Aufnahmenuten (5) bzw. unterhalb der Aufnahmenuten (5) angeordnet bzw. fixiert ist.

9. Plattenaggregat nach Anspruch 8, wobei die Zwischenlage (6) eine Metallfolie, insbesondere eine Aluminiumfolie ist.

10. Plattenaggregat nach einem der Ansprüche 1 bis 9, wobei die obere Lage (4) an zumindest einer Seite, bevorzugt an zwei Seiten des Plattenaggregates (1) über die untere Lage (3) übersteht und wobei ein überstehender Abschnitt (9) der oberen Lage (4) ein Verbindungselement zur Verbindung des Plattenaggregates (1) mit einem benachbarten Plattenaggregat (1) ist.

11. Verfahren zur Herstellung eines Plattenaggregates (1) zur Aufnahme von Heizungsrohren (2) und/oder Kühlrohren, insbesondere nach einem der Ansprüche 1 bis 10, wobei an der Unterseite einer oberen Lage (4) eine untere Lage (3) mit im Vergleich zur oberen Lage (4) geringeren Härte fixiert wird, insbesondere angeklebt wird, wobei anschließend zumindest eine Aufnahmenut (5) von der Oberseite der oberen Lage (4) mit der Maßgabe erzeugt wird, dass sich die Aufnahmenut (5) über die gesamte Dicke der oberen Lage (4) erstreckt und wobei daraufhin zumindest ein Heizungsrohr (2) und/oder Kühlrohr in die Aufnahmenut (5) eingebracht wird.

12. Verfahren nach Anspruch 11, wobei zunächst in die Unterseite der oberen Lage (4) zumindest eine Nut (11) mit der Maßgabe eingebracht wird, dass ein Nutboden (12) verbleibt, wobei im Anschluss daran die untere Lage (3) an der Unterseite der oberen Lage (4) fixiert wird und wobei danach der Nutboden (12) entfernt wird, so dass die sich über die gesamte Dicke der oberen Lage (4) erstreckende Aufnahmenut (5) entsteht.

13. Verfahren nach Anspruch 12, wobei der Nutboden (12) mit der Maßgabe entfernt wird, dass die Breite der Aufnahmenut (5) im Bereich des entfernten Nutbodens (12) geringer ist als die Breite der Aufnahmenut (5) außerhalb bzw. unterhalb dieses Bereiches, so dass an der Oberseite der oberen Lage (4) Hinterschnitte (8) gebildet werden.

14. Verfahren nach einem der Ansprüche 11 bis 13, wobei eine dünne Zwischenlage (6) aus einem wärmeleitfähigen Material auf der unteren Lage (3) fixiert wird, insbesondere angeklebt wird und wobei die untere Lage (3) anschließend unter Zwischenschaltung der Zwischenlage (6) an der oberen Lage (4) fixiert wird.

15. Verfahren nach einem der Ansprüche 11 bis 14, wobei nach Einbringung des Rohres in die Aufnahmenut (5) die Aufnahmenut (5) mit einer Spachtelmasse aufgefüllt wird.
